# EUROPÄISCHE PATENTSCHRIFT

(11) **EP 0 482 223 B1**
(45) Veröffentlichungstag und Bekanntmachung des Hinweises auf die Patenterteilung: **12.01.1994**
(21) Anmeldenummer: 90120156.6
(22) Anmeldetag: 20.10.1990
(51) Int. Cl.: B23K 26/00

(54) **Bandschweissmaschine**
Band welding machine
Machine à souder des bandes

(43) Veröffentlichungstag der Anmeldung: 29.04.1992
(73) Patentinhaber: BWG BERGWERK- UND WALZWERK-MASCHINENBAU GMBH, D-47051 Duisburg (DE)
(72) Erfinder: Noé, Oskar, Dipl.-Ing., W-4330 Mülheim (Ruhr) (DE)
(74) Vertreter: Honke, Manfred, Dr.-Ing.

(56) Entgegenhaltungen:
- EP-A- 0 151 848
- EP-A- 0 248 143
- PATENT ABSTRACTS OF JAPAN vol. 11, no. 140 (M-586)(2587) 08 Mai 1987, & JP-A-61 276790 (KAWAZAKI STEEL CORP) 06 Dezember 1986,
- PATENT ABSTRACTS OF JAPAN vol. 9, no. 279 (M-427)(2002) 07 November 1985, & JP-A-60 121089 (MITSUBISHI DENKI K. K.) 28 Juni 1985,

## Beschreibung

Die Erfindung betrifft eine Bandschweißmaschine zum Stumpfschweißen von gestoßenen Schnittflächen an jeweils Bandanfang und Bandende miteinander zu verbindender Metallbänder,
- mit einer Laser-Schweißvorrichtung mit einem Laser-Schweißkopf,
- mit einer Schneidvorrichtung mit senkrecht auf die beiden Metallbänder niederfahrbaren Schneidwerkzeugen zum Erzeugen der Schnittflächen,
- mit in Bandlängsrichtung verfahrbaren Klemmzangenpaaren mit jeweils einer oberen Klemmzange und einer unteren Klemmzange zum Festklemmen der miteinander zu verbindenden Metallbänder im Bereich des Bandanfanges und des Bandendes und zum Zusammenführen der Schnittflächen bis zur spaltfreien Stoßbildung auf einer Auflagefläche unterhalb des Laser-Schweißkopfes,
- und mit Andrückelementen zum Andrücken von Bandanfang und Bandende beidseitig der gestoßenen Schnittflächen gegen die Auflagefläche.

Es ist eine derartige Bandschweißmaschine bekannt, die bevorzugt in kontinuierlich arbeitenden Bandbehandlungslinien eingesetzt wird. Denn in solchen Bandbehandlungslinien müssen nach Durchlauf eines Coils das Bandende und der Bandanfang des neuen Coils miteinander verbunden werden. Das geschieht bei der bekannten Bandschweißmaschine im Wege des Laser-Schweißens. Durch das Laser-Schweißen sollen - um die Planheit der Metallbänder auch im Bereich ihrer Verbindungsnaht zu gewährleisten - Schweißüberstände bzw. -verdickungen vermieden werden. Allerdings funktioniert das Laser-Schweißen nur dann, wenn exakt parallele und plane Schnittflächen und gleichsam spaltfrei gestoßene Schnittflächen für den Schweißprozeß zur Verfügung stehen. Das ist bei der bekannten Bandschweißmaschine kaum der Fall. Denn die Schneidwerkzeuge für die Schnittfläche am Bandanfang und die Schnittfläche am Bandende sind kombiniert und gleichsam zu einer einzigen Stanze als Schneidvorrichtung zusammengefaßt Folglich werden die Schnittflächen für den Bandanfang und das Bandende stets gemeinsam im Zuge eines einzigen Stanz- bzw. Schneidhubes erzeugt. Es hat sich jedoch herausgestellt, daß ein solcher Schneidprozeß zu Formfehlern an den Schnittkanten führt, weil einerseits Kantenabzug, andererseits Einriß und Gratbildung auftreten. Folglich fehlt die für ein einwandfreies Laser-Schweißen erforderliche Parallelität und Planheit der Schnittflächen. Aus dieser schlechten Schnittflächenqualität resultieren fehlerhafte Schweißnähte (vgl. EP 0 151 848). - Hier will die Erfindung Abhilfe schaffen.

Der Erfindung liegt die Aufgabe zugrunde, eine Bandschweißmaschine der eingangs beschriebenen Art zu schaffen, deren Schneidvorrichtung für die Schweißverbindung von Bandende und Bandanfang im Zuge des Laser-Schweißens parallele und plane Schnittflächen mit höchster Präzision im rechten Winkel zur Bandachse erzeugt.

Diese Aufgabe löst die Erfindung bei einer gattungsgemäßen Bandschweißmaschine dadurch, daß die Schneidvorrichtung voneinander getrennte Schneidwerkzeuge für die Schnittflächen einerseits am Bandanfang und andererseits am Bandende aufweist. - Es hat sich überraschenderweise herausgestellt, daß dann einwandfreie planparalle Schnittflächen hergestellt werden können, wenn die Erzeugung dieser Schnittflächen einerseits am Bandanfang und andererseits am Bandende getrennt voneinander mittels separater Schneidwerkzeuge erfolgt. Das gelingt nach einer Ausführungsform der Erfindung bevorzugt dann, wenn die beiden Schneidwerkzeuge als getrennte Stanzen mit jeweils einem Schneidstempel und einer Schneidplatte unter Bildung von zwei parallelen distanzierten Schneidkanten für einen Doppelschnitt ausgebildet sind. Denn in einem solchen Fall treten an beiden Schneidkanten jeder Stanze identisch große Schnittkräfte auf, so daß selbst bei unterschiedlicher Banddicke und/oder Bandbreite und/oder - bezogen auf das Bandmaterial - Festigkeit einwandfreie Schnittflächen entstehen. Nach einer anderen Ausführungsform der Erfindung gelingt das dann, wenn die beiden voneinander getrennten Schneidwerkzeuge jeweils zwei Untermesser und ein nahezu spaltlos zwischen die beiden Untermesser einfahrendes Obermesser aufweisen. In beiden Fällen stehen Präzisionsschneidwerkzeuge zur Erzeugung planparalleler Schnittflächen an den miteinander zu verschweißenden Enden der Metallbänder zur Verfügung, ohne daß Formfehler in Kauf genommen werden müssen, welche beim Laser-Schweißen zu fehlerhaften Schweißnähten führen.

Weitere erfindungswesentliche Merkmale sind im folgenden aufgeführt. So können die Obermesser zur Optimierung ihrer Schneidwirkung eine dachfirstartige Kontur aufweisen. Zur Erhöhung der Verschleißfestigkeit sind die Obermesser und Untermesser zweckmäßigerweise mit Titannitrit beschichtet. Die Präzision der Schneidwerkzeuge wird dadurch noch erhöht, daß vorzugsweise die Schneidwerkzeuge mittels Prismen in Position und Winkel zu dem Laserkopf kraft- und formschlüssig fixiert sind. Aus montagetechnischen Gründen können die Schneidwerkzeuge quer zur Bandlängsrichtung verfahrbar sein. Weiter sieht die Erfindung vor, daß jedes Schneidwerkzeug beidseitig seiner Obermesser niederfahrbare Niederhalter zum Niederhalten der Metallbänder während des Schneidvorganges beidseitig der Untermesser aufweisen. Auch das trägt zum Erzielen von sauberen Schnittflächen bei. Um eine einwandfreie Ausrichtung der planparallelen Schnittflächen Stoß gegen Stoß für den Schweißvorgang zu erreichen, können die Andrückelemente als gegen die Auflagefläche niederfahrbare Schweißklemmen ausgebildet sein. Ferner lehrt die Erfindung, daß die Auflagefläche als Schweißtisch mit einem Führungsspalt unterhalb des Laser-Schweißkopfes für einen unterhalb des Schweißtisches angeordneten und in dem Führungsspalt über die Tischebene hochfahrbaren bzw. darunter versenkbaren Anschlag für das jeweilige Bandende oder den jeweiligen Bandanfang ausgebildet ist. Dadurch wird eine einwandfreie Positionierung von Bandanfang und Bandende bzw. der schließlich gestoßenen Schnittflächen unterhalb des Laser-Schweißkopfes erreicht. Ein integrierter Sensor registriert die Lage der gestoßenen Schnittflächen und folglich des Schweißstoßes zur Fokusbahn. Der Laser-Schweißkopf fährt im Eilgang bis zu den gestoßenen Schnittflächen. Das Laser-Schweißen erfolgt mit vorprogrammierter Arbeitsgeschwindigkeit. Die Schweißparameter wie horizontale und vertikale Fokuslage werden überwacht, so daß sich reproduzierbare Schweißergebnisse erreichen lassen. Der Laser-Schweißkopf läuft nach dem Schweißprozeß im Eilgang in seine Ausgangsstellung zurück. Die Schweißklemmen öffnen. Die zusammengeschweißten Metallbänder werden angehoben, so daß die Prozeßlinie anlaufen kann. Kurz vor dem nächsten Schweißzyklus werden die Schneidwerkzeuge, die Schweißklemmen und der Anschlag automatisch gereinigt, z. B. mittels Druckluft.

Im folgenden wird die Erfindung anhand einer lediglich ein Ausführungsbeispiel darstellenden Zeichnung näher erläutert; es zeigen:

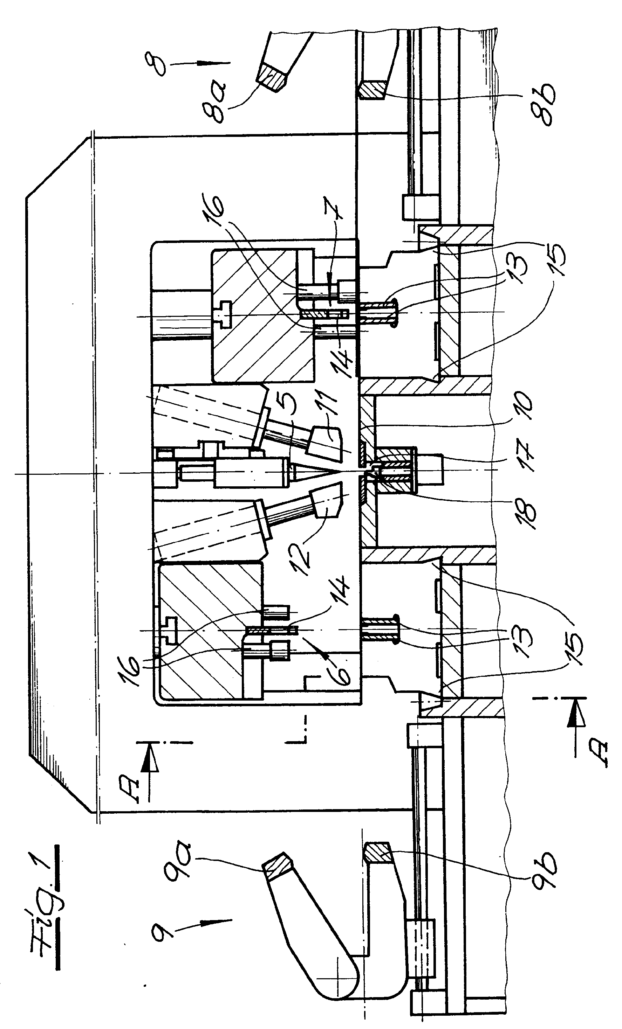

- Fig. 1: eine erfindungsgemäße Bandschweißmaschine in schematischer Seitenansicht vor dem Schneidvorgang,

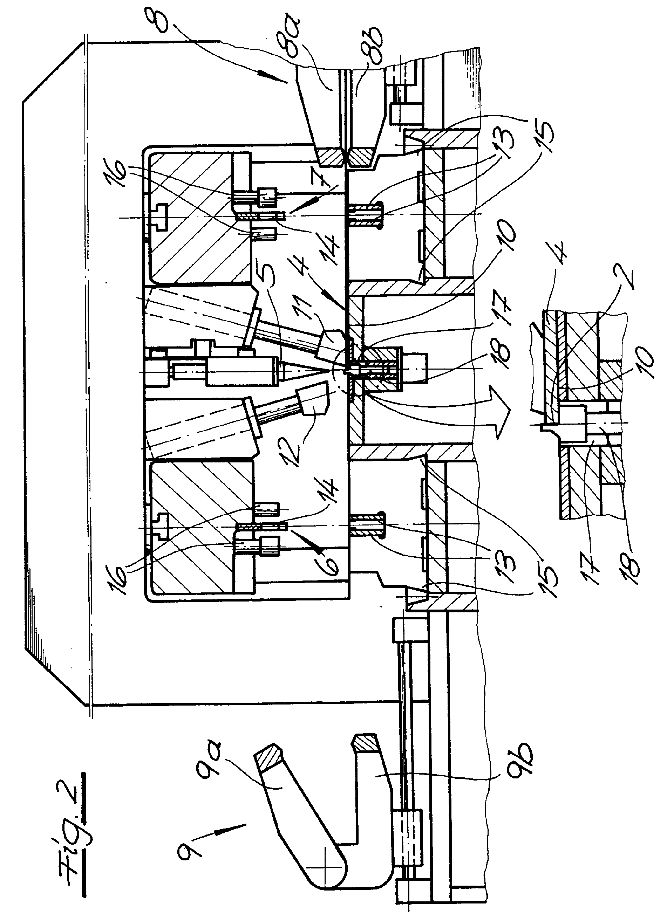

- Fig. 2: den Gegenstand nach Fig. 1 nach Zuführung der Schnittfläche am Bandende gegen den Anschlag unterhalb des Laser-Schweißkopfes,

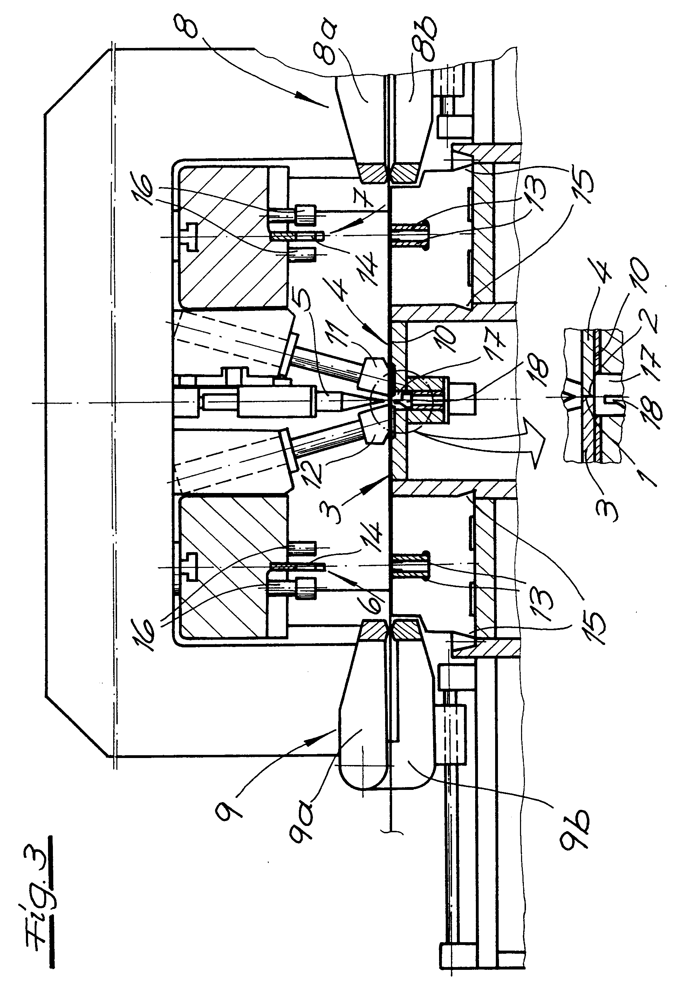

- Fig. 3: den Gegenstand nach Fig. 1 während des Schweißvorganges und

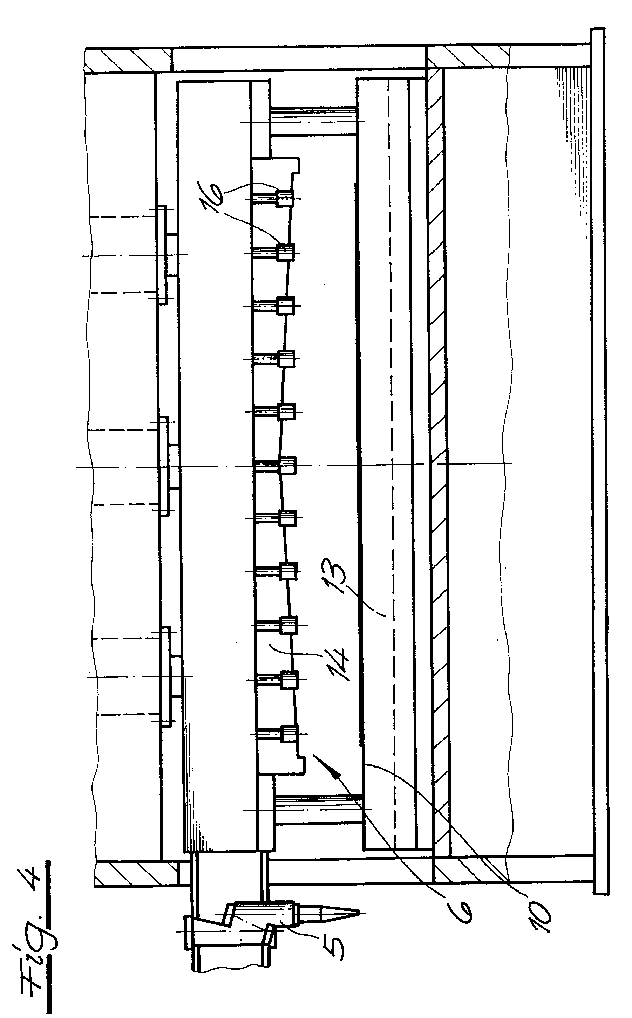

- Fig. 4: einen Schnitt A-A durch den Gegenstand nach Fig. 1.

In den Figuren ist eine Bandschweißmaschine zum Stumpfschweißen von gestoßenen Schnittflächen 1, 2 an jeweils dem Bandanfang 3 und dem Bandende 4 miteinander zu verbindender Metallbänder dargestellt. Diese Bandschweißmaschine weist eine Laser-Schweißvorrichtung mit einem Laser-Schweißkopf 5 auf, ferner eine Schneidvorrichtung mit senkrecht auf die beiden Metallbänder niederfahrbaren Schneidwerkzeugen 6, 7 zum Erzeugen der Schnittflächen 1, 2. Außerdem sind in Bandlängsrichtung verfahrbare Klemmzangenpaare 8, 9 mit jeweils einer oberen Klemmzange 8a bzw. 9a einer unteren Klemmzange 8b bzw. 9b zum Festklemmen der miteinander zu verbindenden Metallbänder im Bereich des Bandanfanges 3 und des Bandendes 4 und zum Zusammenführen der Schnittflächen 1, 2 bis zur spaltfreien Stoßbildung auf einer Auflagefläche 10 unterhalb des Laser-Kopfes 5 vorgesehen. Außerdem weist die Bandschweißmaschine Andrückelemente 11, 12 zum Andrücken von Bandanfang 3 und Bandende 4 beidseitig der gestoßenen Schnittflächen 1, 2 gegen die Auflagefläche 10 auf.

Die Schneidvorrichtung besitzt voneinander getrennte und folglich selbständige Schneidwerkzeuge 6, 7 zum Erzeugen der Schnittflächen 1, 2 am Bandanfang 3 und am Bandende 4. Nach dem Ausführungsbeispiel weisen die beiden voneinander getrennten Schneidwerkzeuge 6, 7 jeweils zwei Untermesser 13 und ein nahezu spaltlos zwischen die beiden Untermesser 13 einfahrendes Obermesser 14 auf. Dadurch lassen sich mit hoher Präzision saubere bzw. exakt planparallele Schnittflächen 1, 2 herstellen. Die Obermesser 14 besitzen eine dachfirstartige Kontur und sind wie die Untermesser mit Titannitrat beschichtet. Die Schneidwerkzeuge 6, 7 sind mittels Prismen 15 in Lage und Winkel zu dem Laser-Schweißkopf 5 kraft- und formschlüssig fixiert. Außerdem sind die Schneidwerkzeuge 6, 7 quer zur Bandlängsrichtung verfahrbar. Jedes Schneidwerkzeug 6, 7 weist beidseitig seines Obermessers 14 niederfahrbare Niederhalter 16 zum Niederhalten der Metallbänder während des Schneidvorganges beidseitig der Untermesser 13 auf. Die Niederhaltung erfolgt insoweit auf den Prismen 15, in denen die Untermesser 13 eingelassen sind. Die Andrückelemente sind als gegen die Auflagefläche 10 niederfahrbare Schweißklemmen 11, 12 ausgebildet.

Die Auflagefläche ist als Schweißtisch 10 mit einem Führungsspalt 17 unterhalb des Laser-Schweißkopfes 5 für einen unterhalb des Schweißtisches 10 angeordneten und in dem Führungsspalt 17 über die Tischebene hochfahrbaren bzw. unter die Tischebene versenkbaren Anschlag 18 für das jeweilige Bandende 4 oder den jeweiligen Bandanfang 3 ausgebildet.

Zum Erzeugen planparalleler Schnittflächen 1, 2 klemmt das eine Klemmzangenpaar 8 das vorlaufende Metallband fest und verfährt das Bandende 4 gegen den hochgefahrenen Anschlag 18. Dann preßt die zugeordnete Schweißklemme 11 das Bandende auf dem Schweißtisch 10 fest. Der versenkbare Anschlag 18 fährt unter die Tischebene. Nun wird der Bandanfang 3 des nachfolgenden Metallbandes von dem ihm zugeordneten Klemmzangenpaar 9 mit einer definierten Vorschubkraft gegen das bereits auf dem Schweißtisch 10 niedergeklemmte Bandende 4 mit einer definerten Vorschubkraft gefahren bis die Schnittflächen 1, 2 an beiden Bandenden einen spaltfreien Stoß bilden. Dann wird der Bandanfang 3 ebenfalls mittels der ihm zugeordneten Schweißklemme 12 gegen den Schweißtisch 10 niedergeklemmt. Die planparallelen Schnittflächen 1, 2 befinden sich dann spaltfrei auf der Vertikalachse des Laserschweißkopfes 5. Der Laser-Schweißkopf 5 fährt im Eilgang gegen die gestoßenen Schnittflächen 1, 2 nieder und stellt die Schweißverbindung mit vorprogrammierter Arbeitsgeschwindigkeit her, um anschließend wieder im Eilgang in seine Ausgangsstellung zurückzukehren.

## Patentansprüche

1. Bandschweißmaschine zum Stumpfschweißen von gestoßenen Schnittflächen (1, 2) an jeweils dem Bandanfang (3) und dem Bandende (4) miteinander zu verbindender Metallbänder,
- mit einer Laser-Schweißvorrichtung mit einem Laser-Schweißkopf (5),
- mit einer Schneidvorrichtung mit senkrecht auf die beiden Metallbänder niederfahrbaren Schneidwerkzeugen (6, 7) zum Erzeugen der Schnittflächen (1, 2),
- mit voneinander getrennten Schneidwerkzeugen (6, 7) für die Schnittflächen (1, 2) am Bandanfang (3) und am Bandende (4),
- mit in Bandlängsrichtung verfahrbaren Klemmzangenpaaren (8, 9) mit jeweils einer oberen Klemmzange (8a, 9a) und einer unteren Klemmzange (8b, 9b) zum Festklemmen der miteinander zu verbindenen Metallbänder im Bereich des Bandanfanges (3) und des Bandendes (4) und zum Zusammenführen der Schnittflächen (1, 2) bis zur spaltfreien Stoßbildung auf einer Auflagefläche (10) unterhalb des Laser-Schweißkopfes (5),
- und mit Andrückelementen (11, 12) zum Andrücken von Bandanfang (3) und Bandende (4) beidseitig der gestoßenen Schnittflächen (1, 2) gegen die Auflagefläche (10),
**dadurch gekennzeichnet,** daß die beiden voneinander getrennten Schneidwerkzeuge (6, 7) jeweils zwei Untermesser (13) und eine nahezu spaltlos zwischen die beiden Untermesser einfahrendes Obermesser (14) aufweisen.

2. Bandschweißmaschine zum Stumpfschweißen von gestoßenen Schnittflächen (1, 2) an jeweils dem Bandanfang (3) und dem Bandende (4) miteinander zu verbindender Metallbänder,
- mit einer Laser-Schweißvorrichtung mit einem Laser-Schweißkopf (5),
- mit einer Schneidvorrichtung mit senkrecht auf die beiden Metallbänder niederfahrbaren Schneidwerkzeugen (6,7) zum Erzeugen der Schnittflächen (1, 2),
- mit voneinander getrennten Schneidwerkzeugen (6, 7) für die Schnittflächen (1, 2) am Bandanfang (3) und am Bandende (4),
- mit in Bandlängsrichtung verfahrbaren Klemmzangenpaaren (8, 9) mit jeweils einer oberen Klemmzange (8a, 9a) und einer unteren Klemmzange (8b, 9b) zum Festklemmen der miteinander zu verbindenden Metallbänder im bereich des Bandanfanges (3) und des Bandendes (4) und zum Zusammenführen der Schnittflächen (1, 2) bis zur spaltfreien Stoßbildung auf einer Auflagefläche (10) unterhalb des Laser-Schweißkopfes (5),
- und mit Andrückelementen (11, 12) zum Andrücken von Bandanfang (3) und Bandende (4) beidseitig der gestoßenen Schnittflächen (1, 2) gegen die Auflagefläche (10),
dadurch gekennzeichnet, daß die beiden Schneidwerkzeuge (6, 7) als getrennte Stanzen mit jeweils einem Schneidstempel und einer Schneidplatte unter Bildung von zwei parallelen distanzierten Schneidkanten für einen Doppelschnitt ausgebildet sind.

3. Bandschweißmaschine nach Anspruch 1, dadurch gekennzeichnet, daß die Obermesser (14) eine dachfirstartige Kontur aufweisen.

4. Bandschweißmaschine nach einem der Ansprüche 1, oder 3, dadurch gekennzeichnet, daß die Obermesser (14) und Untermesser (13) mit Titannitrit beschichtet sind.

5. Bandschweißmaschine nach einem der Ansprüche 1 bis 4, dadurch gekennzeichnet, daß die Schneidwerkzeuge (6, 7) mittels Prismen (15) in Position und Winkel zu dem Laser-Schweißkopf (5) kraft- und formschlüssig fixiert sind.

6. Bandschweißmaschine nach einem der Ansprüche 1 bis 5, dadurch gekennzeichnet, daß die Schneidwerkzeuge (6, 7) quer zur Bandlängsrichtung verfahrbar sind.

7. Bandschweißmaschine nach einem der Ansprüche 1 oder 2 bis 6, dadurch gekennzeichnet, daß jedes Schneidwerkzeug (6, 7) beidseitig seines Obermessers (14) niederfahrbare Niederhalter (16) zum Niederhalten der Metallbänder während des Schneidvorganges beidseitig der Untermesser (13) aufweist.

8. Bandschweißmaschine nach einem der Ansprüche 1 bis 7, dadurch gekennzeichnet, daß die Andrückelemente als gegen die Auflagefläche (10) niederfahrbare Schweißklemmen (11, 12) ausgebildet sind.

9. Bandschweißmaschine nach einem der Ansprüche 1 bis 8, dadurch gekennzeichnet, daß die Auflagefläche als Schweißtisch (10) mit einem Führungsspalt (17) unterhalb des Laser-Schweißkopfes (5) für einen unterhalb des Schweißtisches (10) angeordneten und in dem Führungsspalt (17) über die Tischebene hochfahrbaren bzw. unter die Tischebene versenkbaren Anschlag (18) für das jeweilige Bandende (4) oder den jeweiligen Bandanfang (3) ausgebildet ist.

## Claims

1. A strip welding machine for butt-welding butted-together cut edges (1, 2) to each other at the start of strip (3) and at the end of strip (4) in each case for metal strips to be joined,
- with a laser welding device with a laser welding head (5),
- with a cutting device with cutting tools (6, 7) which can be lowered perpendicularly on to the metal strips to produce the cut edges (1, 2),
- with cutting tools (6, 7) which are separated from each other, for the cut edges (1, 2) at the start of strip (3) and the end of strip (4),
- with pairs of clamping grippers (8, 9) which can be moved in the longitudinal direction of the strip, each with an upper clamping gripper (8a, 9a) and a lower clamping gripper (8b, 9b) for clamping the metal strips to be joined to each other in the region of the start of strip (3) and the end of strip (4) and for bringing together the cut edges (1, 2) until a butt joint is formed without a gap on a support surface (10) underneath the laser welding head (5),
- and with contact pressure elements (11, 12) for pressing the start of strip (3) and the end of strip (4) against the support surface (10) on both sides of the abutting cut edges (1, 2),
characterised in that the two cutting tools (6, 7) which are separated from each other each have two lower cutters (13) and an upper cutter (14) which is inserted almost without a gap between the two lower cutters.

2. A strip welding machine for butt-welding butted-together cut edges (1, 2) to each other at the start of strip (3) and at the end of strip (4) in each case for metal strips to be joined,
- with a laser welding device with a laser welding head (5),
- with a cutting device with cutting tools (6, 7) which can be lowered perpendicularly on to the metal strips to produce the cut edges (1, 2),
- with cutting tools (6, 7) which are separated from each other, for the cut edges (1, 2) at the start of strip (3) and the end of strip (4),
- with pairs of clamping grippers (8, 9) which can be moved in the longitudinal direction of the strip, each with an upper clamping gripper (8a, 9a) and a lower clamping gripper (8b, 9b) for clamping the metal strips to be joined to each other in the region of the start of strip (3) and the end of strip (4) and for bringing together the cut edges (1, 2) until a butt joint is formed without a gap on a support surface (10) underneath the laser welding head (5),
- and with contact pressure elements (11, 12) for pressing the start of strip (3) and the end of strip (4) against the support surface (10) on both sides of the abutting cut edges (1, 2),
characterised in that the two cutting tools (6, 7) are constructed as separate punches, each with a clipping punch and a clipping bed, with the formation of two parallel, spaced-apart cutting edges for a double cut.

3. A strip welding machine according to claim 1, characterised in that the upper cutters (14) have a profile like that of a roof ridge.

4. A strip welding machine according to one of claims 1 or 3, characterised in that the upper cutters (14) and lower cutters (13) are coated with titanium nitride.

5. A strip welding machine according to any one of claims 1 to 4, characterised in that the cutting tools (6, 7) are fixed in position and at their angle to the laser welding head (5) with a frictional and positive fit by means of V-blocks (15).

6. A strip welding machine according to any one of claims 1 to 5, characterised in that the cutting tools (6, 7) can move transversely to the longitudinal direction of the strip.

7. A strip welding machine according to one of claims 1 or 2 to 6, characterised in that each cutting tool (6, 7) has lowerable holding-down clamps (16) on both sides of its upper cutter (14) for holding down the metal strips during the cutting operation on both sides of the lower cutter (13).

8. A strip welding machine according to any one of claims 1 to 7, characterised in that the contact pressure elements are constructed as welding clamps (11, 12) which can be lowered towards the support surface (10).

9. A strip welding machine according to any one of claims 1 to 8, characterised in that the support surface is constructed as a welding bench (10) with a guide slot (17) underneath the laser welding head (5) for a stop (18) for the respective end of strip (4) or the respective start of strip (3), which stop is disposed underneath the welding bench (10) and which can be raised above the plane of the bench or lowered underneath the plane of the bench in the guide slot (17).

## Revendications

1. Machine à souder des bandes pour souder bout à bout des surfaces de coupe (1, 2) accostées au commencement (3) et à la fin (4) de bandes métalliques à joindre entre elles,
- avec un dispositif de soudage à laser avec une tête de soudage à laser (5),
- avec un dispositif de coupe avec des outils de coupe (6, 7) pouvant être abaissés verticalement sur les deux bandes métalliques pour produire les surfaces de coupe (1, 2),
- avec des outils de coupe (6, 7) séparés l'un de l'autre pour les surfaces de coupe (1, 2) au commencement (3) et à la fin (4) des bandes,
- avec des paires de pinces (8, 9) pouvant coulisser dans le sens longitudinal des bandes, ayant chacune une branche supérieure (8a, 9a) et une branche inférieure (8b, 9b) pour serrer les bandes métalliques à joindre ensemble dans la région du commencement (3) et de la fin (4) des bandes et pour guider ensemble les surfaces de coupe (1, 2) jusqu'à leur accostage jointif sur une surface d'appui (10) sous la tête de soudage à laser (5),
- et avec des éléments presseurs (11, 12) pour presser le commencement (3) et la fin (4) des bandes de part et d'autre des surfaces de coupe (1, 2) accostées, contre la surface d'appui (10),
**caractérisée** en ce que les deux outils de coupe (6, 7) séparés l'un de l'autre présentent chacun deux couteaux inférieurs (13) et un couteau supérieur (14) s'engageant presque sans interstice entre les deux couteaux inférieurs.

2. Machine à souder des bandes pour souder bout à bout des surfaces de coupe (1, 2) accostées au commencement (3) et à la fin (4) de bandes métalliques à joindre entre elles,
- avec un dispositif de soudage à laser avec une tête de soudage à laser (5),
- avec un dispositif de coupe avec des outils de coupe (6, 7) pouvant être abaissés verticalement sur les deux bandes métalliques pour produire les surfaces de coupe (1, 2),
- avec des outils de coupe (6, 7) séparés l'un de l'autre pour les surfaces de coupe (1, 2) au commencement (3) et à la fin (4) des bandes,
- avec des paires de pinces (8, 9) pouvant coulisser dans le sens longitudinal des bandes, ayant chacune une branche supérieure (8a, 9a) et une branche inférieure (8b, 9b) pour serrer les bandes métalliques à joindre ensemble dans la région du commencement (3) et de la fin (4) des bandes et pour guider ensemble les surfaces de coupe (1, 2) jusqu'à leur accostage jointif sur une surface d'appui (10) sous la tête de soudage à laser (5),
- et avec des éléments presseurs (11, 12) pour presser le commencement (3) et la fin (4) des bandes de part et d'autre des surfaces de coupe (1, 2) accostées, contre la surface d'appui (10),
**caractérisée** en ce que les deux outils de coupe (6, 7) sont sous la forme d'estampes séparées ayant chacune un poinçon coupant et une plaque de coupe en formant deux arêtes de coupe parallèles espacées pour une double coupe.

3. Machine à souder des bandes selon la revendication 1, caractérisée en ce que les couteaux supérieurs (14) présentent un contour analogue au faîte d'un toit.

4. Machine à souder des bandes selon une des revendications 1 ou 3, caractérisée en ce que les couteaux supérieurs (14) et inférieurs (13) sont revêtus de nitrure de titane.

5. Machine à souder des bandes selon une des revendications 1 à 4, caractérisée en ce que les outils de coupe (6, 7) sont fixés fermement en position et angulairement par rapport à la tête de soudage à laser (5) au moyen de prismes (15) de forme complémentaire.

6. Machine à souder des bandes selon une des revendications 1 à 5, caractérisée en ce que les outils de coupe (6, 7) sont déplaçables transversalement au sens longitudinal des bandes.

7. Machine à souder des bandes selon une des revendications 1 ou 2 à 6, caractérisée en ce que chaque outil de coupe (6, 7) présente, de part et d'autre de son couteau supérieur (14), des organes de maintien vers le bas (16) pouvant être abaissés pour maintenir en bas les bandes métalliques pendant l'opération de soudage, de part et d'autre des couteaux inférieurs (13).

8. Machine à souder des bandes selon une des revendications 1 à 7, caractérisée en ce que les éléments presseurs sont sous la forme de pinces de soudage (11, 12) pouvant être abaissées contre la surface d'appui (10).

9. Machine à souder des bandes selon une des revendications 1 à 8, caractérisée en ce que la surface d'appui est sous la forme d'une table de soudage (10) avec une fente de guidage (17) en dessous de la tête de soudage à laser (5) pour une butée (18) disposée en dessous de la table de soudage (10) et pouvant être soulevée dans la fente de guidage (17) au dessus du plan de la table et être abaissée sous le plan de la table, pour l'extrémité (4) d'une bande ou le commencement d'une bande (3), respectivement.
